# EUROPEAN PATENT SPECIFICATION

(11) **EP 1 086 603 B1**
(45) Date of publication and mention of the grant of the patent: **09.07.2003**
(21) Application number: 99926473.2
(22) Date of filing: 26.05.1999
(51) Int. Cl.: H04Q 7/38

(54) **MOBILE COMMUNICATION NETWORK AND METHOD OF OPERATION THEREOF**
MOBILES KOMMUNIKATIONSNETZ UND BETRIEBSVERFAHREN HIERFÜR
RESEAU DE TELECOMMUNICATION MOBILE ET SON PROCEDE DE FONCTIONNEMENT

(30) Priority: 10.06.1998 GB 9812409
(43) Date of publication of application: 28.03.2001
(73) Proprietor: MOTOROLA LTD, Basingstoke, Hampshire RG22 4PD (GB)
(72) Inventor: THOMAS, Howard, Cirencester GL7 1EJ (GB); QUIRKE, Thomas, Swindon, Wiltshire SN2 2UH (GB); O'NEILL, Rorie, Swindon, Wiltshire SN2 7AH (GB)
(74) Representative: Potts, Susan Patricia
(86) International application number: EP9903732
(87) International publication number: WO99065264

(56) References cited:
- WO-A-93/22849
- DE-C- 19 629 899

## Description

### Field of the Invention

The present invention relates to a mobile communication network (particularly but not exclusively the Global System for Mobile communication (GSM) network) comprising a group of cells associated with a simulcast carrier and to a method of operation of such a network.

### Background of the Invention

In a cellular mobile communication system each of the mobile stations communicate with a typically fixed base station. Communication from the mobile station to the base station is known as uplink and communication from the base station to the mobile station is known as downlink. The total coverage area of the system is divided into a number of separate cells each covered by a single base station. The cells are typically geographically distinct with an overlapping coverage area with neighbouring cells. As a mobile station moves from the coverage area of one cell to the coverage area of another cell, the communication link will change from being between the mobile station and the base station of the first cell to being between the mobile station the base station of the second cell. This is known as a handover.

Specifically, some cells may lie completely within the coverage of other larger cells. These are known as hierarchical cells and an example is so called microcells which are used to provide a high traffic capacity in high traffic areas. Typically the microcells are small and a large number of cells can be implemented in a limited area. A mobile station moving into the microcell will be handed over from the overlaying cell, known as the macrocell. This frees up resource at the macrocell and hierarchical cell thus provide the possibility of a large coverage area combined with high traffic capacity.

All base stations are interconnected by a fixed network. This fixed network comprises communication lines, switches, interfaces to other communication networks, various controllers required for operating the network and the base stations themselves. A call from a mobile station is routed through this network to the destination specific for this call. If the call is between two mobile stations of the same communication system the call will be routed through the network to the base station of the cell in which the other mobile station currently is. A connection is thus established between the two serving cells through the network. Alternatively, if the call is between a mobile station and a telephone connected to the Public Switched Telephone Network (PSTN) the call is routed from the serving base station to the interface between the cellular mobile communication system and the PSTN. It is then routed from the interface to the telephone by the PSTN.

A simulcast system is one in which all the cells within an area transmit an identical signal, at the same frequency, at all times. This broadcast signal contains control information and is used as a beacon to determine relative signal strength. Additionally, each cell within the simulcast system can transmit a second frequency upon which traffic can be relayed. The second frequency is different from cell to cell although it may be reused if there is sufficient distance to mitigate interference. As a mobile is likely to remain within this simulcast system during the period of a call and the simulcast carrier effectively creates a single larger umbrella cell, very few intercell (between simulcast cells and external cells) handovers will be required. Consequently, the majority of handovers will be of the intracellular (between the simulcast cells) type. Since there is a single umbrella cell identification the mobile cannot identify the smaller target cells beneath this umbrella cell: i.e. the handover process cannot be mobile assisted i.e. based on the mobile station differentiating between broadcast carriers. Rather than mobiles identifying cells, the cells identify the target mobiles by making measurements of the strength of neighbour uplink traffic. The stronger the neighbour measurement compared to measurements made by other cells the more probable that the observed mobile will handover into that cell.

The cells can be microcells or picocells for example. Picocells are commonly used inside buildings (where radio propagation through the external walls or internal partitions in the 900 MHz or 1800MHz bands is severely attenuated by metal structures for example) and microcells are commonly used in somewhat larger regions such as city centres for example.

In order to make measurements of the mobile stations in the surrounding simulcast cells the base stations will retune to the frequencies of the traffic carriers in these cells. However, as the frequencies are reused the base stations will measure a combined signal level of the desired mobile station and all mobile stations allocated the same time slot in cells using the same traffic carrier frequency. This may lead to inaccurate measurements and degraded handover performance.

### Summary of the Present Invention

One object of the invention is to overcome or alleviate such a disadvantage.

More generally, the invention provides additional flexibility in a mobile network and enables more information to be obtained about the state of the network, as will become apparent.

According to a first aspect of the invention, there is provided a mobile communication network comprising a group of cells (2) with a common simulcast carrier carrying signaling information, at least a first cell being associated with a first traffic carrier, characterised by the mobile communication network further comprising at least a first mobile station (4,4') arranged to intermittently perform an intracell handover to the common simulcast carrier in response to a control signal; means for generating the control signal in response to a clock signal or in response to a measurement of received signal level or quality of a radio transmission from the first mobile station (4,4') falling below a given threshold; and means for performing measurements of the radio environment when the mobile station (4,4') is using the common simulcast carrier.

In one embodiment the intracell handover is from the first traffic carrier to the common simulcast carrier.

According to a different feature of the invention, one or more base stations are arranged to measure a received signal level and/or quality of the signal transmitted by the mobile station on the common simulcast carrier and a handover is determined in response to the measurements.

In one embodiment the mobile communication network is a GSM network.

According to a second aspect of the invention, there is provided a base station (1,1') operating in a communication system having a group of cells (2) with a common simulcast carrier carrying signaling information and at least a first cell being associated with a first traffic carrier, characterised by the base station (1,1') comprising means for directing a mobile station (4,4') to intermittently perform an intracell handover to the common simulcast carrier in response to a control signal; means for generating the control signal in response to a clock signal or in response to a measurement of received signal level or quality of a radio transmission from the mobile station (4,4') falling below a given threshold; and means for performing measurements of the radio environment when the mobile station (4,4') is using the common simulcast carrier.

According to a third aspect of the invention, there is provided a method of operating a mobile communication network with a group of cells (2) with a common simulcast carrier carrying signaling information and at least a first cell being associated with a first traffic carrier, the method characterised by comprising the steps of: intermittently performing an intracell handover of a first mobile (4,4') station to the common simulcast carrier in response to a control signal; generating the control signal in response to a clock signal or in response to a measurement of received signal level or quality of a radio transmission from the first mobile station (4,4') falling below a given threshold;, and performing measurements of the radio environment when the mobile station (4,4') is using the common simulcast carrier.

### Brief Description of the Drawings

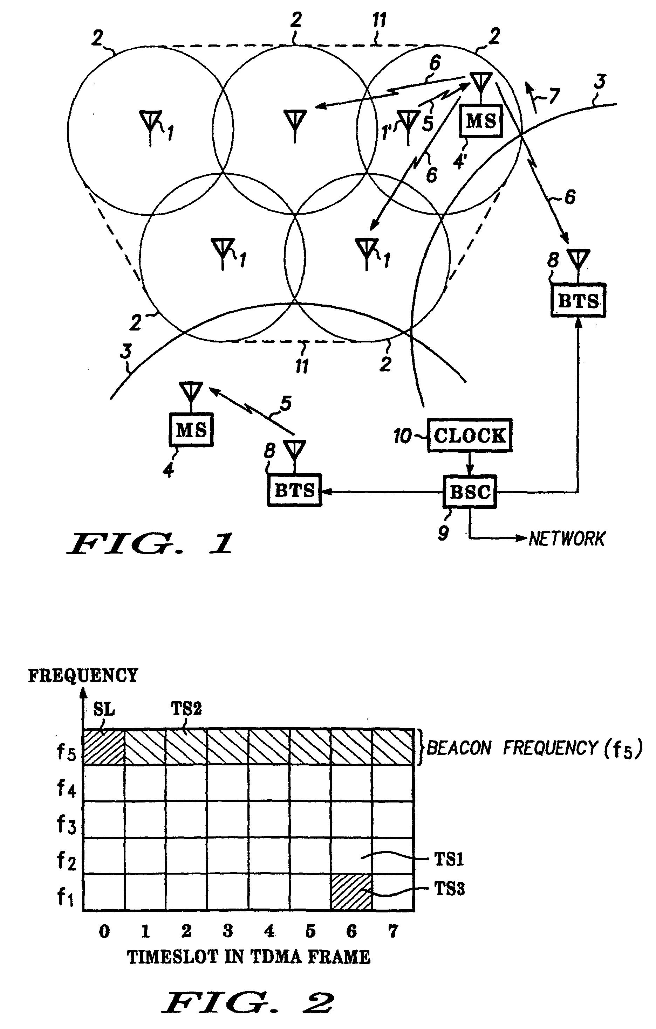

A preferred embodiment is described below by way of example only with reference to Figures 1 and 2 of the accompanying drawings, wherein:
Figure 1 is a schematic diagram of a GSM mobile communication network in accordance with this invention, employing a simulcast BCCH carrier which extends over a group of picocells or microcells;
Figure 2 is a timeslot:frequency diagram of a base station in the network of Figure 1.

### Description of a Preferred Embodiment

Referring to Figure 1, the GSM network illustrated comprises a group of picocellular heads 1 defining respective picocells 2, each picocell 2 representing the coverage of a respective broadcast carrier signal associated
with each picocellular head. Associated with each of the picocellular heads is a traffic carrier, each traffic carrier having a different frequency from those of at least its nearest neighbouring picocells.

A further simulcast carrier is transmitted from each picocellular head 1 and extends over all the above picocells as illustrated at 11.

The above group of picocells interfaces with in this case two macrocells 3 defined by carriers transmitted from base transceiver stations 8, which are in turn linked by fixed communications links to a common base station controller 9 and thence to the rest of the network. In a variant, the picocells 2 could be microcells and an umbrella cell could overlie the picocells or microcells.

In operation, a control signal generated e.g. by a clock 10 and transmitted over the fixed communications links or alternatively generated in response to a detection of radio signal level and/or quality below a predetermined threshold is broadcast to a mobile station 4 and (as indicated by radio signal 5) instructs the mobile station to perform an intracell handover to an uplink carrier frequency and timeslot corresponding to the simulcast carrier. Such a signal 5 could also be transmitted by a picocellular head 1' to a mobile station 4' as illustrated, the change in frequency being represented by arrow 7.

The structure of signal 5 will now be described in more detail with reference to Figures 2 before describing the response of the mobile stations 4 and 4'.

Figure 2 shows the frequency:timeslot distribution of the various signals transmitted by a base transceiver station (BTS) 8 to its associated macrocell or by a picocellular head 1 to its associated picocell. The group of frequencies (or more accurately frequency bands) f₁ to f₅ available to a given (macro or pico) cell will typically not include any frequencies in common with those used by neighbouring cells, in order to avoid interference. In other respects the frequency:timeslot distributions of the respective macrocells and picocells are similar.

The carrier is transmitted in slot SL corresponding to timeslot 0 and frequency f₅, the beacon frequency. The carrier comprises the FCCH, SCH, BCCH, PCH and AGCH channels which carry respective types of control and information data to the mobile stations within the cell, as defined in the GSM specifications. In order to ensure that the most powerful transmission is on the beacon frequency (to enable it to be identified by mobile stations within the cell in order to enable them to access the above control and information data) any slots not used on frequency f₅ are filled with dummy bursts.

The above frequency:timeslot structure is conventional in GSM mobile communication networks. It is now assumed that a call has been established to or from a mobile station within a cell of interest. The mobile station will be communicating using a timeslot TS1 on the traffic carrier frequency of the corresponding picocell. The signal 5 will be carried to the mobile station through a control channel in the time slot SL, for example on the FACCH (Fast Associated Control Channel). The signal 5 will result in the mobile station changing to a time slot TS2 on the BCCH frequency.

Having described the intracellular handover of a mobile station to a new traffic channel on the BCCH carrier, the resulting operation will now be described further with reference to Figure 1. There are a number of choices.

Firstly it will be noted that the timeslot TS1 previously used by the picocellular head 1' to transmit traffic to the mobile within its picocell is no longer used, since this function has been taken over by the radio unit responsible for the simulcast transmission. Accordingly the transceiver (not shown) associated with the picocellular head 1' can be retuned to another frequency during this timeslot and used to make e.g. interference measurements or measurements of mobile station signal level and/or quality on that frequency. For example a mobile station communicating in a time slot TS3 on the traffic frequency f1 of the neighbour picocell can be measured by changing the receive frequency from f2 to f1 during time slot 6. Alternatively, the receiver can continue to receive on the same frequency f2 and thus measure the interference level in the absence of the mobile station. This information can then be passed back up to a base station controller 9 and thence to an appropriate part of the fixed network controlling frequency allocation between cells or picocells. A similar procedure could be followed by a base transceiver station 8 associated with a macrocell 3 (or with a microcell, not shown).

Secondly all the picocell transceivers within the coverage 11 of the simulcast BCCH can be arranged to measure the signal level from the mobile station as they all have the BCCH carrier frequency f5 in common. This information can then be used to select the neighbouring picocell 2 receiving the highest power and/or signal quality for intercellular handover as the mobile station approaches that picocell. This is a desirable facility because the conventional method of cell selection for intercellular handover, involving downlink measurements by mobile stations, the results of which are transmitted to the base transceiver stations, can result in ambiguity as a result of two mobile stations in no-neighbouring picocells but within the simulcast coverage area 11 transmitting on the same frequency. Difficulties can also arise when the mobile stations are fast-moving - e.g. in trains.

Preferably, the mobile station will return to a traffic carrier following the measurements. However, this traffic carrier can be that of a different picocell if the measurements indicate that that will result in better performance.

According to one feature of the invention the signal 5 is generated by a clock which for example periodically instigates a new measurement. The clock can be located centrally in the network and can be distributed through the fixed network to the appropriate picocell heads for transmission to the mobile stations. Alternatively, the process can be instigated in response to measurements of the current radio transmission. Information of interference levels and possible transmission quality for neighbour base stations is of most importance when the current transmission quality is unsatisfactory and a hand over is required for improved quality. For example, if a mobile station has an unsatisfactory quality level for the current serving picocell it can be instructed to handover to the BCCH carrier where all picocell will be able to measure the signal level from the mobile station. A handover to a given picocell head can then be determined in response to these measurements. Preferably by selecting the picocell which receives the strongest signal level from the mobile station.

The measurement process can thus be instigated in response to a measurement of the signal level or quality of the current transmission. Preferably, the measurement process would be instigated when these levels fell below a given threshold.

According to a feature of the invention the measurements are repeated for a number of mobile stations thereby building up information of the distribution of mobiles within the network.

In a variant of the above embodiment, a mobile station is temporarily assigned to a slot of the simulcast carrier when it originates a call. Uplink measurements similar to those described above are then made at the picocellular heads (or at base transceiver stations associated with microcells) and an appropriate picocell or microcell is assigned to the mobile station on the basis of such measurements. In this embodiment the intracellular handover is thus not from another traffic carrier but rather from a non-active state.

Although an embodiment of the invention has been described in the context of a GSM mobile cellular communication network, it should be noted that the invention is not restricted to such a network but that it is also applicable to other mobile cellular networks such as the NADC network in the USA and the PDC network in Japan.

## Claims

1. A mobile communication network comprising a group of cells (2) with a common simulcast carrier carrying signaling information, at least a first cell being associated with a first traffic carrier, **characterised by** the mobile communication network further comprising at least a first mobile station (4,4') arranged to intermittently perform an intracell handover to the common simulcast carrier in response to a control signal; means for generating the control signal in response to a clock signal or in response to a measurement of received signal level or quality of a radio transmission from the first mobile station (4,4') falling below a given threshold; and means for performing measurements of the radio environment when the mobile station (4,4') is using the common simulcast carrier.

2. A mobile communication network as claimed in claim 1 wherein the intracell handover is from the first traffic carrier to the common simulcast carrier.

3. A mobile communication network as claimed in claim 1 wherein said clock (10) means is located in a fixed part of the network and is arranged to transmit said signal to one or more mobile stations.

4. A mobile communication network as claimed in claim 1 wherein one or more base stations (1,1',8) are arranged to measure a received signal level and/or quality of the signal transmitted by the mobile station on the common simulcast carrier.

5. A mobile communication network as claimed in claim 1 wherein a handover is determined in response to the measurements.

6. A mobile communication network as claimed in claim 1 wherein base stations in different cells (1,1',8) are arranged to measure transmitted signal level and/or signal quality from a plurality of mobile stations in such new uplink channels and the network is arranged to process the measurements to determine the distribution of mobile stations within the network.

7. A mobile communication network as claimed in claim 1 wherein a base station (1') of a cell from which the intracell handover is made is arranged to be re-tuned to receive on a frequency different from the first traffic channel while traffic is being handled by the common simulcast carrier.

8. A mobile communication network as claimed in claim 7 wherein the base station (1') of the cell from which the intracell handover is made is arranged to be used to monitor interference on the first traffic carrier while traffic is being handled by the new uplink channel.

9. A mobile communication network as claimed in any preceding claim which is a GSM network.

10. A base station (1,1') operating in a communication system having a group of cells (2) with a common simulcast carrier carrying signaling information and at least a first cell being associated with a first traffic carrier, **characterised by** the base station (1,1') comprising means for directing a mobile station (4,4') to intermittently perform an intracell handover to the common simulcast carrier in response to a control signal; means for generating the control signal in response to a clock signal or in response to a measurement of received signal level or quality of a radio transmission from the mobile station (4,4') falling below a given threshold; and means for performing measurements of the radio environment when the mobile station (4,4') is using the common simulcast carrier.

11. A method of operating a mobile communication network with a group of cells (2) with a common simulcast carrier carrying signaling information and at least a first cell being associated with a first traffic carrier, the method **characterised by** comprising the steps of: intermittently performing an intracell handover of a first mobile (4,4') station to the common simulcast carrier in response to a control signal; generating the control signal in response to a clock signal or in response to a measurement of received signal level or quality of a radio transmission from the first mobile station (4,4') falling below a given threshold;, and performing measurements of the radio environment when the mobile station (4,4') is using the common simulcast carrier.

## Patentansprüche

1. Mobilkommunikationsnetz, umfassend eine Gruppe von Zellen (2) mit einem gemeinsamen Simulcast-Träger, der Signalisierungsinformationen trägt, wobei wenigstens eine erste Zelle, einem ersten Verkehrträger zugeordnet ist, **dadurch gekennzeichnet, dass** das Mobilkommunikationsnetz weiter umfasst:
wenigstens eine erste Mobilstation (4,4'), die so eingerichtet ist, dass sie als Reaktion auf ein Steuersignal intermittierend einen intrazellularen Handover an den gemeinsamen Simulcast-Träger durchführt; Mittel zum Erzeugen des Steuersignals als Reaktion auf ein Taktgebersignal oder als Reaktion auf eine Messung der Empfangssignalstärke oder -qualität einer Funkübertragung von der ersten Mobilstation (4,4'), die unter einen gegebenen Schwellenwert fällt; und Mittel zur Durchführung von Messungen der Funkumgebung, wenn die Mobilstation (4,4') den gemeinsamen Simulcast-Träger verwendet.

2. Mobilkommunikationsnetz nach Anspruch 1, wobei der intrazellulare Handover von dem ersten Verkehrsträger zu dem gemeinsamen Simulcast-Träger erfolgt.

3. Mobilkommunikationsnetz nach Anspruch 1, wobei die Taktgebermittel (10) in einem festen Teil des Netzes positioniert sind und zur Versendung des Signals an eine oder mehrere Mobilstationen eingerichtet sind.

4. Mobilkommunikationsnetz nach Anspruch 1, wobei eine oder mehrere Basisstationen (1,1',8) zur Messung einer Empfangssignalstärke und/oder -qualität des von der Mobilstation auf dem gemeinsamen Simulcast-Träger übertragenen Signals eingerichtet sind.

5. Mobilkommunikationsnetz nach Anspruch 1, wobei ein Handover als Reaktion auf die Messungen bestimmt wird.

6. Mobilkommunikationsnetz nach Anspruch 1, wobei Basisstationen in verschiedenen Zellen (1,1',8) zur Messung einer übertragenen Signalstärke und/oder Signalqualität von einer Mehrzahl von Mobilstationen in solchen neuen Aufwärtsverbindungskanälen eingerichtet sind und das Netz zur Durchführung der Messungen zur Bestimmung der Verteilung der Mobilstationen innerhalb des Netzes eingerichtet ist.

7. Mobilkommunikationsnetz nach Anspruch 1, wobei eine Basisstation (1') einer Zelle, von der der intrazellulare Handover ausgeht, derart eingerichtet ist, dass sie für den Empfang auf einer Frequenz, die von dem ersten Verkehrskanal verschieden ist, neu abgestimmt werden kann, während der Verkehr von dem gemeinsamen Simulcast-Träger gehandhabt wird.

8. Mobilkommunikationsnetz nach Anspruch 7, wobei die Basisstation (1') der Zelle, von der der intrazellulare Handover ausgeht, derart eingerichtet ist, dass sie verwendet werden kann, um die Interferenz auf dem ersten Verkehrsträger zu überwachen, während der Verkehr von dem neuen Aufwärtsverbindungskanal gehandhabt wird.

9. Mobilkommunikationsnetz nach einem der vorangehenden Ansprüche, wobei das Netz ein GSM-Netz ist.

10. Basisstation (1,1'), die in einem Kommunikationssystem mit einer Gruppe von Zellen (2) mit einem gemeinsamen Simulcast-Träger, der Signalisierungsinformationen trägt, und mit wenigstens einer ersten Zelle, die einem ersten Verkehrsträger zugeordnet ist, arbeitet, **dadurch gekennzeichnet, dass** die Basisstation (1,1') umfasst:
Mittel zum Anweisen einer Mobilstation (4,4'), als Reaktion auf ein Steuersignal intermittierend einen intrazellularen Handover an den gemeinsamen Simulcast-Träger durchzuführen; Mittel zum Erzeugen des Steuersignals als Reaktion auf ein Taktgebersignal oder als Reaktion auf eine Messung der Empfangssignalstärke oder -qualität einer Funkübertragung von der Mobilstation (4,4'), die unter einen gegebenen Schwellenwert fällt; und Mittel zum Durchführen von Messungen der Funkumgebung, wenn die Mobilstation (4,4') den gemeinsamen Simulcast-Träger verwendet.

11. Verfahren zum Betreiben eines Mobilkommunikationsnetzes mit einer Gruppe von Zellen (2) mit einem gemeinsamen Simulcast-Träger, der Signalisierungsinformationen trägt, und wenigstens einer ersten Zelle, die einem ersten Verkehrsträger zugeordnet ist, wobei das Verfahren **dadurch gekennzeichnet ist, dass** es die Schritte umfasst: intermittierendes Durchführen eines intrazellularen Handovers einer ersten Mobilstation (4,4') an den gemeinsamen Simulcast-Träger als Reaktion auf ein Steuersignal; Erzeugen des Steuersignals als Reaktion auf ein Taktgebersignal oder als Reaktion auf eine Messung der Empfangssignalstärke oder-qualität einer Funkübertragung von der ersten Mobilstation (4,4'), die unter einen gegebenen Schwellenwert fällt; und Durchführen von Messungen der Funkumgebung, wenn die Mobilstation (4,4') den gemeinsamen Simulcast-Träger verwendet.

## Revendications

1. Réseau de communication mobile comprenant un groupe de cellules (2) avec une porteuse de diffusion simultanée commune qui est porteuse d'une information de signalisation, au moins une première cellule étant associée à une première porteuse de trafic, **caractérisé en ce que** le réseau de communication mobile comprend en outre au moins une première station mobile (4, 4') qui est agencée pour réaliser par intermittence un transfert intra-cellule sur la porteuse de diffusion simultanée commune en réponse à un signal de commande ; un moyen pour générer le signal de commande en réponse à un signal d'horloge ou en réponse à une mesure d'un niveau de signal reçu ou d'une qualité d'une émission radio en provenance de la première station mobile (4, 4') tombant au-dessous d'un seuil donné ; et un moyen pour réaliser des mesures de l'environnement radio lorsque la station mobile (4, 4') est en train d'utiliser la porteuse de diffusion simultanée commune.

2. Réseau de communication mobile selon la revendication 1, dans lequel le transfert intra-cellule est depuis la première porteuse de trafic sur la porteuse de diffusion simultanée commune.

3. Réseau de communication mobile selon la revendication 1, dans lequel ledit moyen d'horloge (10) est localisé dans une partie fixe du réseau et est agencé pour émettre ledit signal sur une ou plusieurs stations mobiles.

4. Réseau de communication mobile selon la revendication 1, dans lequel une ou plusieurs stations de base (1, 1', 8) sont agencées pour mesurer un niveau de signal reçu et/ou une qualité du signal qui est émis par la station mobile sur la porteuse de diffusion simultanée commune.

5. Réseau de communication mobile selon la revendication 1, dans lequel un transfert est déterminé en réponse aux mesures.

6. Réseau de communication mobile selon la revendication 1, dans lequel des stations de base dans différentes cellules (1, 1', 8) sont agencées pour mesurer un niveau de signal émis et/ou une qualité de signal à partir d'une pluralité de stations mobiles dans des nouveaux canaux de liaison montante et le réseau est agencé pour traiter les mesures afin de déterminer la distribution de stations mobiles à l'intérieur du réseau.

7. Réseau de communication mobile selon la revendication 1, dans lequel une station de base (1') d'une cellule depuis laquelle le transfert intra-cellule est réalisé est agencée pour être ré-accordée pour recevoir une fréquence qui est différente du premier canal de trafic tandis que le trafic est en train d'être manipulé par la porteuse de diffusion simultanée commune.

8. Réseau de communication mobile selon la revendication 7, dans lequel la station de base (1') de la cellule depuis laquelle le transfert intra-cellule est réalisé est agencée pour être utilisée pour surveiller l'interférence sur la première porteuse de trafic tandis que le trafic est en train d'être manipulé par le nouveau canal de liaison montante.

9. Réseau de communication mobile selon l'une quelconque des revendications précédentes, qui est un réseau GSM.

10. Station de base (1, 1') fonctionnant dans un système de communication comportant un groupe de cellules (2) avec une porteuse de diffusion simultanée commune qui est porteuse d'une information de signalisation et au moins une première cellule qui est associée à une première porteuse de trafic, **caractérisée en ce que** la station de base (1, 1') comprend un moyen pour diriger une station mobile (4, 4') de manière à réaliser par intermittence un transfert intra-cellule sur la porteuse de diffusion simultanée commune en réponse à un signal de commande ; un moyen pour générer le signal de commande en réponse à un signal d'horloge ou en réponse à une mesure d'un niveau de signal reçu ou d'une qualité d'une émission radio en provenance de la station mobile (4, 4') tombant au-dessous d'un seuil donné ; et un moyen pour réaliser des mesures de l'environnement radio lorsque la station mobile (4, 4') est en train d'utiliser la porteuse de diffusion simultanée commune.

11. Procédé de fonctionnement d'un réseau de communication mobile avec un groupe de cellules (2) avec une porteuse de diffusion simultanée commune qui est porteuse d'une information de signalisation et au moins une première cellule qui est associée à une première porteuse de trafic, le procédé étant **caractérisé en ce qu'**il comprend les étapes de : réalisation par intermittence d'un transfert intra-cellule d'une première station mobile (4, 4') sur la porteuse de diffusion simultanée commune en réponse à un signal de commande ; génération du signal de commande en réponse à un signal d'horloge ou en réponse à une mesure d'un niveau de signal reçu ou d'une qualité d'une émission radio depuis la première station mobile (4, 4') tombant au-dessous d'un seuil donné ; et réalisation de mesures de l'environnement radio lorsque la station mobile (4, 4') est en train d'utiliser la porteuse de diffusion simultanée commune.
